# EUROPÄISCHE PATENTSCHRIFT

(11) **EP 3 972 461 B1**
(45) Veröffentlichungstag und Bekanntmachung des Hinweises auf die Patenterteilung: **27.11.2024**
(21) Anmeldenummer: 20713300.0
(22) Anmeldetag: 26.03.2020
(51) Int. Cl.: A47J 31/36

(54) **BRÜHKAMMER, BRÜHEINHEIT, MASCHINE UND SYSTEM FÜR DIE ZUBEREITUNG EINES FLÜSSIGEN LEBENSMITTELS AUS EINER KAPSEL**
BREWING CHAMBER, BREWING UNIT, MACHINE AND SYSTEM FOR PREPARING A LIQUID FOOD PRODUCT FROM A CAPSULE
CHAMBRE D'INFUSION, UNITÉ D'INFUSION, MACHINE ET SYSTÈME DE PRÉPARATION D'UNE DENRÉE ALIMENTAIRE LIQUIDE À PARTIR D'UNE CAPSULE

(30) Priorität: 21.05.2019 EP 19175514
(43) Veröffentlichungstag der Anmeldung: 30.03.2022
(73) Patentinhaber: Delica AG, 5033 Buchs AG (CH)
(72) Erfinder: WÜTHRICH, Martin, 4417 Ziefen (CH); AFFOLTER, Roland, 5103 Möriken (CH)
(74) Vertreter: Hepp Wenger Ryffel AG
(86) Internationale Anmeldenummer: PCT/EP2020/058588
(87) Internationale Veröffentlichungsnummer: WO 2020/233874

(56) Entgegenhaltungen:
- WO-A1-2012/020343
- WO-A1-2020/233783
- US-A1- 2006 254 428

## Beschreibung

Die vorliegende Erfindung betrifft eine Brühkammer, eine Brüheinheit, eine Maschine und ein System für die Zubereitung eines flüssigen Lebensmittels aus einer Kapsel.

Aus dem Stand der Technik sind zahlreiche Brühkammern bekannt. Die Kapseln aus Kunststoff oder Aluminium werden dabei in die Brühkammer eingeführt, wo sie beim Schliessen der Brühkammer wenigstens auf einer Seite penetriert werden. Zum Schliessen der Brühkammer muss ein bestimmter Schliessdruck aufgebracht werden, da die Extraktion teilweise unter hohem Druck erfolgt. Beim Öffnen der Brühkammer fällt die gebrauchte Portionsverpackung nach unten in einen Auffangbehälter. Für die Schliessbewegung an der Brühkammer und für das Aufbringen der dazu erforderlicher Kraft werden Betätigungselemente beispielsweise in der Form von einarmigen Schwenkhebeln eingesetzt. Derartige Hebelmechanismen sind beispielsweise bekannt aus EP 1 646 305, WO 2008/004116, WO 2009/074553, WO 2012/032019.

Die WO 2012/020343 A1 offenbart eine Brühkammer, wobei der bewegliche Teil der Brühkammer zweiteilig teleskopartig ausgeführt ist. Nach abgeschlossener Schliessbewegung wird mittels der Brühflüssigkeit eine zusätzliche Bewegung ausgelöst, um Fertigungstoleranzen der Mechanik auszugleichen.

Es ist Aufgabe der Erfindung, die Nachteile des Standes der Technik zu überwinden. Insbesondere soll die Schliesskraft für den Benutzer verringert werden, ohne die für das dichte Verschliessen der Brühkammer benötigte Kraft zu verringern. Ausserdem soll die Brühkammer einfach und kostengünstig herstellbar sein.

Diese Aufgabe wird durch die in den unabhängigen Patentansprüchen definierten Vorrichtungen gelöst. Weitere Ausführungsformen ergeben sich aus den abhängigen Patentansprüchen.

Eine erfindungsgemässe Brühkammer für die Zubereitung eines flüssigen Lebensmittels aus einer Kapsel umfasst eine Kapselaufnahme und eine Verschlussplatte zum Einschliessen einer Kapsel. Die Kapselaufnahme und die Verschlussplatte sind relativ zueinander von einer offenen Position zum Einführen der Kapsel in eine geschlossene Position zum Einschliessen der Kapsel verschiebbar. Die Brühkammer weist wenigstens einen Fluideinlass zum Einbringen eines Brühfluides, insbesondere Wasser, in die Brühkammer und wenigstens einen Fluidauslass zum Ausbringen des flüssigen Lebensmittels auf. Dabei ist die Kapselaufnahme wenigstens zweiteilig ausgestaltet und weist ein Bodenteil und ein Halterteil auf. In geschlossener Position ist das Halterteil der Kapselaufnahme gegen die Verschlussplatte pressbar, um ein dichtes Einschliessen der Kapsel in der Brühkammer zu ermöglichen. Die Kapselaufnahme weist eine Dichtung auf, welche zwischen dem Halterteil und dem Bodenteil eine fluiddichte Verbindung ermöglicht. Das Bodenteil und das Halterteil sind teleskopartig in einer Achsrichtung zumindest teilweise relativ ineinander verschiebbar, wobei die Dichtung zwischen dem Halterteil und dem Bodenteil eine äussere Dichtlippe und eine innere Dichtlippe aufweist.

Unter teleskopartig wird hier und im Folgenden verstanden, dass die beiden relativ ineinander verschiebbaren Teile derart ausgestaltet sind, dass eine Innenkontur eines äusseren Teiles und eine Aussenkontur eines inneren Teiles zumindest in einem Teilbereich korrespondieren, so dass diese ineinander einschiebbar sind. Entsprechend kann das äussere Teil zumindest teilweise das innere Teil aufnehmen.

Durch das Aufteilen der Kapselaufnahme in wenigstens zwei Teile wird ein Entkoppeln der mechanischen Schliessbewegung der Brühkammer und der finalen Abdichtung der Brühkammer ermöglicht. Die Brühkammer kann von einem Anwender beispielsweise durch Betätigung eines Schliesshebels nach Einlegen einer Kapsel geschlossen werden. Anschliessend erfolgt eine zusätzliche Bewegung des Halterteils der Kapselaufnahme, welche ein dichtes Einschliessen der Kapsel, vorzugsweise ein Abdichten eines Flanschbereichs der Kapsel mit dem Halterteil und der Verschlussplatte, ermöglicht. Diese zusätzliche Bewegung des Halterteils kann durch den Benutzer ausgeführt oder durch die Maschine selbst erfolgen. Die Entkoppelung der beiden Bewegungen erlaubt eine für den Benutzer kraftfreie Schliessbewegung, welche nicht bereits den hohen Anpressdruck für ein dichtes Verschliessen aufbringen muss.

Eine Ausgestaltung der Kapselaufnahme mit teleskopartig ineinander verschiebbarem Halterteil und Bodenteil erlaubt eine einfache Konstruktion sowie die Verwendung einer einfachen Dichtung zwischen Halterteil und Bodenteil.

Durch die Ausgestaltung mit einer äusseren und einer inneren Dichtlippe können der Dichtung unterschiedliche Dichtfunktionen zugeordnet werden, welche je nach Betriebszustand der Brühkammer ihre Wirkung entfalten. Die beiden Bezeichnungen "äussere" und "innere" beziehen sich dabei auf den örtlichen Abstand von einer zentralen Achse der Kapselaufnahme. Somit ist die äussere Dichtlippe weiter entfernt von der zentralen Achse als die innere Dichtlippe.

Die Dichtung kann ringförmig ausgestaltet sein und am Halterteil oder am Bodenteil fixiert sein.

Die äussere und innere Dichtlippe können koaxial angeordnet sein.

Die äussere Dichtlippe kann derart ausgestaltet sein, um mit einer Dichtfläche quer zur Achsrichtung eine Dichtverbindung zu ermöglichen. Entsprechend kann diese Dichtlippe beispielsweise in Achsrichtung abdichten. Diese Dichtfunktion wird sich entsprechend bei einer Relativverschiebung der Teile, also des Halterteils und des Bodenteils, verändern.

Die äussere Dichtlippe kann radial zur Achsrichtung dehnbar sein, um mit einer Dichtfläche parallel zur Achsrichtung eine Dichtverbindung zu ermöglichen. Eine solche Dichtfunktion kann unabhängig von der teleskopartigen Bewegung zwischen Halterteil und Bodenteil ihre Dichtfunktion erfüllen.

Das Bodenteil und das Halterteil können hydraulisch relativ zueinander verschiebbar sein. Durch eine hydraulische ausgelöste Bewegung zwischen Halterteil und Bodenteil wird ermöglicht, die Bewegung unabhängig vom Benutzer auszuführen. Ausserdem ist kein zusätzliches Antriebsmittel nötig, da eine Pumpe für die Bereitstellung des für die Bewegung benötigten hydraulischen Druckes in einer Getränkezubereitungsmaschine bereits vorhanden ist.

Ein für die hydraulische Verschiebung benötigtes Hydraulikfluid kann gleichzeitig das Brühfluid sein. Wenn das Brühfluid für die Zubereitung des Getränkes gleichzeitig auch als Hydraulikfluid für die Relativbewegung zwischen Halterteil und Bodenteil benutzt wird, kann eine besonders einfache Konstruktion erfolgen. Es lässt sich beispielsweise ein Steuerventil einsparen.

Die Brühkammer kann ein Rückschlagventil aufweisen, welches ein Rücklaufen eines Fluides aus der Brühkammer in den Fluideinlass verhindert. Ein solches Rückschlagventil ist besonders im Hinblick auf Hygieneanforderungen nützlich, da erfahrungsgemäss der Benutzer nur gut zugängliche Bereiche einer Getränkezubereitungsmaschine reinigt.

Die innere Dichtlippe der Dichtung kann das Rückschlagventil bilden. Durch die Verwendung der inneren Dichtlippe als Rückschlagventil kann ein zusätzliches Bauelement eingespart werden, die Konstruktion der Brühkammer vereinfacht sich.

Die Dichtung kann bei geschlossener Brühkammer zwischen der inneren Dichtlippe und der äusseren Dichtlippe eine geschlossene Dichtungskammer ausbilden, welche mit dem Fluideinlass direkt verbunden ist. Diese Dichtungskammer kann beispielsweise direkt für den hydraulischen Antrieb der Relativbewegung zwischen Halterteil und Bodenteil verwendet werden.

Die Dichtungskammer kann ein Auslassventil zum Entleeren der Dichtungskammer aufweist. Ein solches Auslassventil ist vorteilhaft, um nach erfolgter Zubereitung eines Getränkes das restliche in der Dichtungskammer verbleibende Hydraulikfluid aus dem Wasserkreislauf ablaufen zu lassen. Insbesondere wenn das Hydraulikfluid gleichzeitig das Brühfluid ist, verhindert ein solches Auslassventil die Verwendung von abgestandenem Wasser für die nächste Getränkezubereitung.

Die äussere Dichtlippe der Dichtung kann das Auslassventil bilden. Durch die Ausgestaltung der Dichtung mit radial dehnbarer äusserer Dichtlippe, kann erreicht werden, dass bei geringem Innendruck in der Dichtungskammer die äussere Dichtlippe nicht mehr an der parallel zur Achsrichtung verlaufenden Dichtfläche anliegt und somit das Auslassventil bildet. Wiederum kann ein zusätzliches Bauelement eingespart werden und die Konstruktion der Brühkammer vereinfacht sich.

Die Brühkammer kann derart ausgestaltet sein, dass bei offener Brühkammer das Auslassventil offen ist und die Dichtungskammer mit einem Restwasserablauf verbunden ist. Das nach der Zubereitung eines Getränkes in der Dichtungskammer verbleibende Hydraulikfluid kann sich nach dem Öffnen der Brühkammer direkt in einen Restwasserablauf entleeren.

Das Halterteil kann an seinem der Verschlussplatte zugeordneten Ende eine Anpresskontur aufweisen, welche mit einer Dichtpartie einer in die Brühkammer eingesetzten oder einzusetzenden Kapsel korrespondiert. Eine solche Anpresskontur kann beispielsweise eine Anpressrippe sein. Es versteht sich von selbst, dass diese Anpresskontur auch eine andere Forme aufweisen kann, welche der mit der Brühkammer bzw. mit der Getränkezubereitungsvorrichtung zu verwendenden Kapsel angepasst ist.

Zwischen dem Bodenteil und dem Halterteil kann ein Federelement derart angeordnet sein, dass das Halterteil und das Bodenteil entgegen einer Rückstellkraft dieses Federelements relativ zueinander verschiebbar sind. Es kann sichergestellt werden, dass bei geöffneter Brühkammer das Halterteil und das Bodenteil vom Federelement auseinander gedrückt werden. Beim Schliessen der Brühkammer kann somit bereits ein Einschliessen der Kapsel mit einem gewissen Anpressdruck zwischen Verschlussplatte, Kapselflansch und Kapselaufnahme erfolgen. Ebenso kann beispielsweise sichergestellt werden, dass bei offener Brühkammer das Auslassventil der Dichtungskammer offen steht, d.h. dass die äussere Dichtlippe das Bodenteil nicht berührt, so dass das Hydraulikfluid aus der Dichtungskammer abfliessen kann. Unter einem Federelement wird jegliche Art von Elementen verstanden, welche im vorliegenden Fall eine Kraft bereitstellen, welche beim zueinander Verschieben des Halterteils und des Bodenteils zu überwinden ist.

Ein weiter Aspekt der vorliegenden Erfindung betrifft eine Brüheinheit für die Zubereitung eines flüssigen Lebensmittels aus einer Kapsel umfassend eine Brühkammer wie vorgängig beschrieben.

Ein weiter Aspekt der vorliegenden Erfindung betrifft eine Maschine für die Zubereitung eines flüssigen Lebensmittels aus einer Kapsel umfassend eine Brühkammer oder eine Brüheinheit wie vorgängig beschrieben.

Die Maschine weist weiter eine Pumpe zum Erzeugen des für die Getränkezubereitung benötigten Fluiddruckes auf, wobei die Pumpe mit dem Fluideinlass der Brühkammer verbunden ist.

Ein weiter Aspekt der vorliegenden Erfindung betrifft ein System für die Zubereitung eines flüssigen Lebensmittels umfassend eine Maschine wie vorgängig beschrieben und eine Kapsel, wobei die Kapsel einen Kapselkörper und einen Deckel aufweist. Der Kapselkörper und der Deckel sind umlaufend an einem Flansch derart verbunden, dass eine geschlossene Kammer zur Aufnahme einer Lebensmittelsubstanz gebildet wird. Die Lebensmittelsubstanz kann trocken oder flüssig sein. Ebenso kann es sich bei der Lebensmittelsubstanz um eine extrahierbare oder lösliche Substanz handeln.

Anhand von Figuren, welche lediglich Ausführungsbeispiele darstellen, wird die Erfindung im Folgenden näher erläutert. Es zeigen:
- Figur 1:: einen Schnitt durch eine erfindungsgemässe Brühkammer, wobei die Brühkammer offen ist,
- Figur 2:: einen Schnitt durch die Brühkammer aus Figur 1, wobei die Brühkammer geschlossen ist,
- Figur 3:: einen Schnitt durch die Brühkammer aus Figur 2, wobei ein hydraulischer Druck anliegt, und
- Figur 4:: eine schematische Schnittdarstellung einer erfindungsgemässen Brüheinheit.

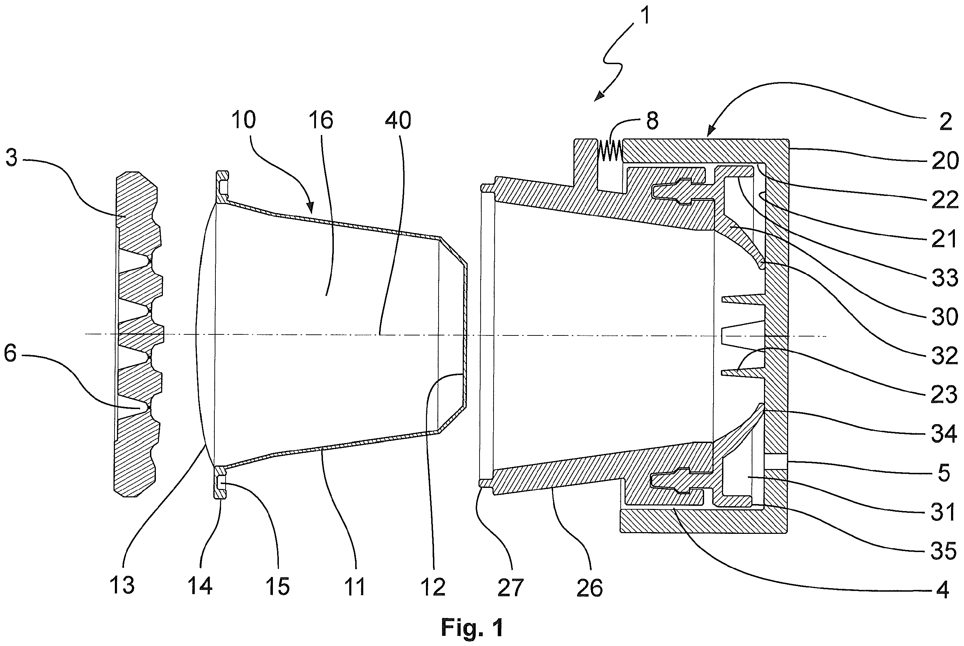

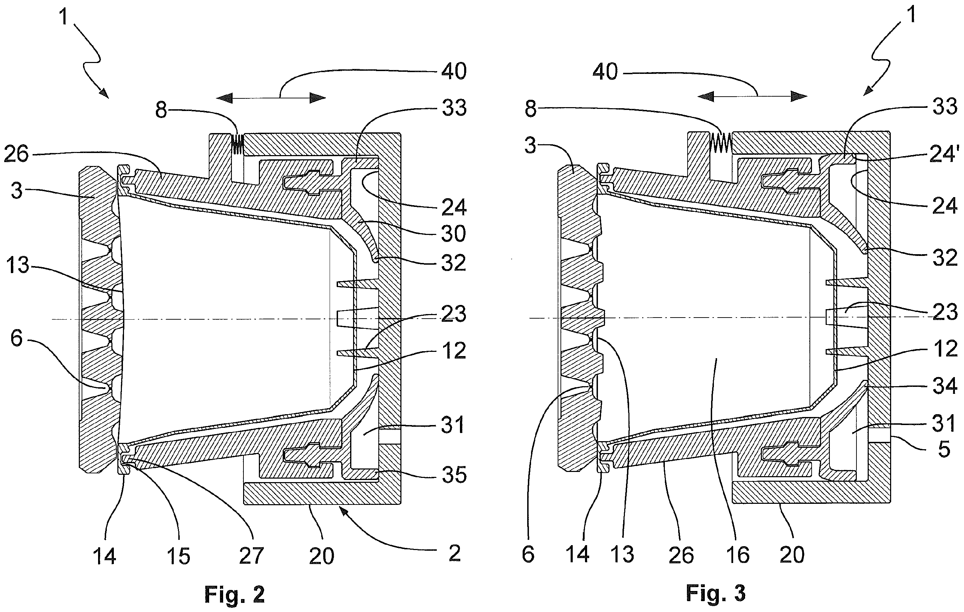

Die Figur 1 zeigt einen Schnitt durch eine erfindungsgemässe Brühkammer 1, wobei die Brühkammer 1 offen ist. Die Brühkammer 1 wird im Wesentlichen aus einer Kapselaufnahme 2 und einer Verschlussplatte 3 gebildet. Eine Kapsel 10 kann zwischen die Kapselaufnahme 2 und die Verschlussplatte 3 eingelegt werden. Bei geschlossener Brühkammer 1 ist die Kapsel 10 komplett eingeschlossen (siehe Figuren 2 und 3), wobei die Bewegungsrichtung beim Verschliessen der Brühkammer einer Achsrichtung 40 folgt.

Die Kapsel 10 besteht aus einem Kapselkörper 11 mit Kapselboden 12. Der Kapselkörper 11 weist an seinem offenen Ende einen Flansch 14 auf, an welchem eine Deckelfolie 13 angebracht ist. Der Flansch 14 weist auf seiner der Deckelfolie 13 gegenüberliegenden Seite eine Nut 15 auf. Der Kapselkörper 11 und die Deckelfolie 13 definieren eine Substanzkammer 16, welche eine Lebensmittelsubstanz (nicht dargestellt) aufnimmt. Die Substanzkammer 16 kann durch geeignete Wahl der Materialien der Deckelfolie 13 und des Kapselkörpers 11 aromadicht verschlossen sein.

Die Verschlussplatte 3 weist kapselseitig eine Reliefstruktur auf, welche ein Öffnen der Deckelfolie 13 der Kapsel 10 unter Druck oder bereits beim Verschliessen der Brühkammer 1 erlaubt. Diese Reliefstruktur kann bekannte Perforationsmittel, beispielsweise Pyramiden, Pyramidenstümpfe, Kegel, Kegelstümpfe, Dornen oder ähnliche Strukturen aufweisen. Ausserdem weist die Verschlussplatte 3 mehrere Fluidauslasse 6 auf, durch welche ein zubereitetes Getränk aus der Brühkammer 1 austreten kann. Diese Fluidauslasse 6 können in den Perforationsmitteln und/oder in Tälern zwischen den Perforationsmitteln angeordnet sein.

Die Kapselaufnahme 2 ist im Wesentlichen zweiteilig ausgestaltet und weist ein Bodenteil 20 und ein Halterteil 26 auf. Das Halterteil 26 dient der Aufnahme der Kapsel 10 und weist eine Innenkontur auf, welche im Wesentlichen einer Seitenwand des Kapselkörpers 11 entspricht. An ihrem der Verschlussplatte 3 zugewandten Ende weist das Halterteil 26 eine Anpressrippe 27 auf. Diese Anpressrippe 27 korrespondiert mit der Nut 15 des Flansches 14 der Kapsel 10 und bildet bei geschlossener Brühkammer 1 eine dichte Verbindung mit dem Flansch 14 der Kapsel 10. Anstelle einer Nut 15 und einer Anpressrippe 27 können auch andere miteinander korrespondierende Mittel zur Bildung einer dichten Verbindung vorgesehen sein. Das Halterteil 26 weist an seinem der Verschlussplatte 3 abgewandten Ende eine Dichtung 30 auf, welche eine dichte Verbindung mit dem Bodenteil 20 ermöglicht. Das Bodenteil 20 weist einen Boden 21 und eine Seitenwand 22 auf. Im Boden 21 des Bodenteils 20 ist ein Fluideinlass 5 angeordnet, durch welchen ein Brühfluid in die Brühkammer 1 einströmen kann. Des Weiteren weist das Bodenteil 20 Aufdrückstifte 23 auf, welche den Kapselboden 12 einer Kapsel 10 beim Verschliessen der Brühkammer 1 durchstossen oder aufdrücken. Das Halterteil 26 mit der Dichtung 30 wird in einem Teilbereich von der Seitenwand 22 des Bodenteils 20 umschlossen, wobei eine teleskopartige Bewegung zwischen Halterteil 26 und Bodenteil 20 ermöglicht wird. Zwischen dem Halterteil 26 und dem Bodenteil 20 ist eine Feder 8 angeordnet, welche die teleskopartige Bewegung des Halterteils 26 zum Bodenteil 20 mit einer Federkraft beaufschlagt. Diese Feder 8 stellt ausserdem sicher, dass bei geöffneter Brühkammer 1 die Dichtung 30 möglichst entspannt wird.

Die Dichtung 30 ist ringförmig ausgestaltet und weist zwei im Wesentlichen konzentrische Dichtlippen 32, 33 auf. Eine innere Dichtlippe 32 steht in permanentem Kontakt mit dem Bodenteil 20 und gewährleistet eine fluiddichte Verbindung zwischen Halterteil 26 und Bodenteil 20. Diese innere Dichtlippe 32 bildet ein Rückschlagventil 34, welches lediglich ein Brühfluid vom Fluideinlass in die Brühkammer 1, bzw. in den Aufnahmeraum für die Kapsel 10 erlaubt. In der Gegenrichtung, also aus dem Aufnahmeraum für die Kapsel 10 zum Fluideinlass 5 sperrt diese Dichtlippe 32 permanent. Eine äussere Dichtlippe 33 berührt das Bodenteil 20 bei offener Brühkammer 1 nicht. Durch die Feder 8 wird das Halterteil 26 mit der Dichtlippe 33 vom Boden 21 des Bodenteils 20 auf Abstand gehalten. Beim Schliessen der Brühkammer 1 muss das Halterteil 26 gegen die Federkraft der Feder 8 zum Bodenteil 20 bewegt werden. Somit kontaktiert erst bei geschlossener Brühkammer 1 (siehe Figuren 2 und 3) die äussere Dichtlippe 33 das Bodenteil 20 und sorgt für eine fluiddichte Verbindung. Entsprechend dient diese äussere Dichtlippe 33 als Auslassventil 35 um nach der Getränkezubereitung ein verbleibendes Brühfluid aus dem Fluideinlass 5 oder einer Dichtungskammer 31, welche durch die beiden Dichtlippen 32, 33 ausgebildet wird, zu entleeren. Diese Restflüssigkeit wird durch das Auslassventil 35 über einen Restwasserablauf 4 abgeführt. Nötigenfalls kann die Dichtungskammer 31 auch aktiv gespült werden.

In der Figur 2 ist ein Schnitt durch die Brühkammer 1 aus Figur 1 dargestellt, wobei die Brühkammer 1 geschlossen ist und die Kapsel einschliesst. Die Schliessbewegung erfolgte in Achsrichtung 40. Beim Verschliessen der Brühkammer 1 schiebt die Verschlussplatte 3 die Kapsel in die Kapselaufnahme 2 bzw. in das Halterteil 26, wobei die Verschlussplatte 3 auf der Deckelfolie 13 der Kapsel aufliegt. Das Halterteil 26 greift mit seiner Anpressrippe 27 in die Nut 15 des Flansches 14 der Kapsel ein. Der Flansch 14 der Kapsel drückt das Halterteil 26 entgegen der Federkraft der Feder 8 in das Bodenteil 20, die Dichtung 30 wird komprimiert, wobei die innere Dichtlippe 32 weiterhin am Boden des Bodenteils 20 aufliegt, während die äussere Dichtlippe 33 das Bodenteil 20 erstmals an einer Dichtfläche 24 berührt. Diese Dichtfläche 24 kann sich am Boden 21 des Bodenteils 20 und/oder an seiner Seitenwand 22 befinden. Das Auslassventil 35 wird somit geschlossen und entsprechend eine geschlossene Dichtungskammer 31 ausgebildet. Der Kapselboden 12 wird durch die Aufdrückstifte 23 des Bodenteils 20 aufgedrückt.

Die Figur 3 zeigt einen Schnitt durch die geschlossene Brühkammer 1 aus Figur 2, wobei ein hydraulischer Druck anliegt. Das Halterteil 26 wird in Achsrichtung 40 gegen die Verschlussplatte 3 gepresst. Ein Brühfluid, üblicherweise heisses Wasser, wird durch den Fluideinlass 5 in die Brühkammer 1 gepresst. Dieses Brühfluid gelangt durch den Fluideinlass 5 in die Dichtungskammer 31. Durch den hydraulischen Druck in der Dichtungskammer 31 wird die äussere Dichtlippe 33 radial nach aussen an die Seitenwand des Bodenteils 20 gedrückt, wo mit einer Dichtfläche 24` eine fluiddichte Verbindung entsteht. Der hydraulische Druck in der Dichtungskammer 31 bewirkt auch eine Relativverschiebung des Halterteils 26 gegenüber dem Bodenteil 20, so dass das Halterteil 26 in Richtung der Verschlussplatte 3 der Brühkammer gepresst wird. Die Verbindung mit der Dichtfläche 24 wird gelöst. Die Anpressrippe des Halterteils 26 greift weiter in die Nut des Flansches 14 der Kapsel 10 ein und drückt den Flansch 14 gegen die Verschlussplatte 3. Es entsteht eine fluiddichte Verbindung, welche nötigenfalls durch weitere Dichtelemente an der Verschlussplatte 3 oder dem Halterteil 26 gewährleistet werden kann. Durch die Relativverschiebung zwischen Halterteil 26 und Bodenteil 20 werden die Aufdrückstifte 23 teilweise aus dem Kapselboden 12 herausgezogen, so dass die aufgestochenen Öffnungen im Kapselboden 12 einen grösseren Querschnitt aufweisen. Ausserdem wird die Feder 8 zwischen dem Halterteil 26 und dem Bodenteil 20 entspannt.

Das Brühfluid kann unter erhöhtem Druck das Rückschlagventil 34 überwinden und dringt durch die aufgestochenen Öffnungen im Kapselboden 12 in die Substanzkammer 16 der Kapsel. Der Fluiddruck baut sich auch in der Substanzkammer 16 auf, so dass die Deckelfolie 13 der Kapsel gegen die Reliefstruktur der Verschlussplatte 3 gepresst wird. Je nach Ausgestaltung der Deckelfolie 13 bzw. der Öffnungsmittel der Reliefstruktur der Verschlussplatte 3 wird die Deckelfolie 13 geöffnet, durchstochen oder aufgerissen und das zubereitete Getränk kann durch die Fluidauslasse 6 austreten. Das Rückschlagventil 34 bzw. die innere Dichtlippe 32 verhindert, dass ein Fluid aus dem die Kapsel aufnehmenden Bereich der Brühkammer 1 in die Dichtungskammer 31 zurückfliesst.

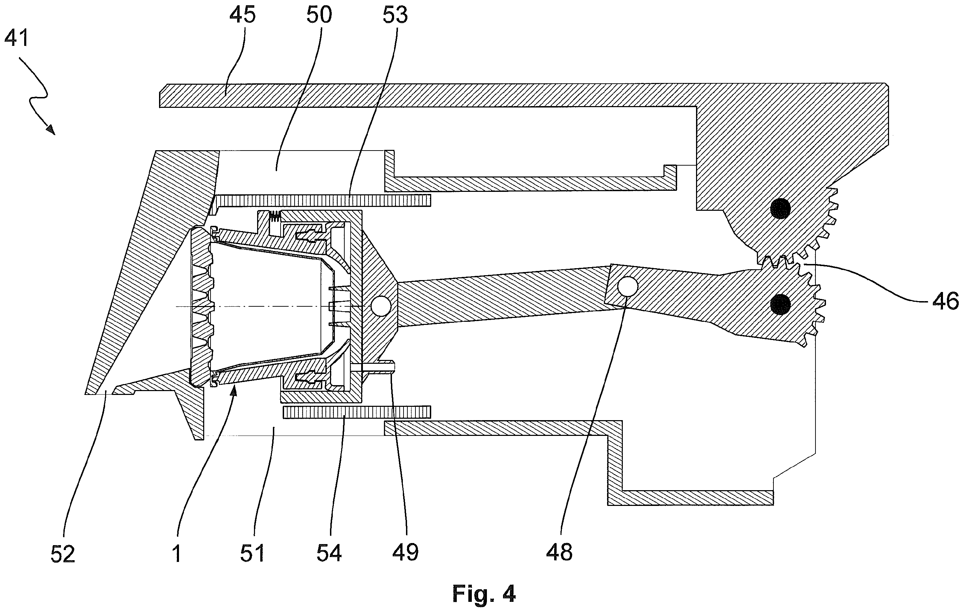

In der Figur 4 ist eine schematische Schnittdarstellung einer erfindungsgemässen Brüheinheit 41 mit geschlossener Brühkammer 1 dargestellt. Die Brühkammer 1 kann über einen Schwenkhebel 45, ein Getriebe 46 und einen Kniehebel 48 zwischen einer offenen Position in eine geschlossene Position bewegt werden. Gleichzeitig werden mit der Bewegung der Brühkammer 1 auch zwei Schiebeelemente 53, 54 bewegt, welche eine Kapseleinlassöffnung 50 und eine Kapselauslassöffnung 51 verschliessen oder freigeben. Ein Schlauchanschluss 49 ist mit dem Fluideinlass 5 (siehe Figuren 1 bis 3) verbunden. An diesem Schlauchanschluss 49 ist eine Pumpe (nicht dargestellt) verbunden, welche das für die Getränkeherstellung benötigte Brühfluid mit entsprechendem Brühdruck bereitstellt. Das zubereitete Getränk tritt aus der Brühkammer durch einen Getränkeauslass 52 aus, welcher mit dem Fluidauslass 6 (siehe Figuren 1 bis 3) verbunden ist.

Nach erfolgter Getränkezubereitung kann ein Benutzer den Schwenkhebel 45 wieder nach oben schwenken, so dass über das Getriebe 46 und den Kniehebel 48 die Brühkammer 1 aus der geschlossenen in die offene Position, wie in der Figur 1 dargestellt, gebracht wird. Da nach erfolgter Getränkezubereitung die Pumpe nicht mehr arbeitet, wird der Brühdruck in der Dichtungskammer 31 nicht aufrechterhalten. Allfälliger noch vorhandener Restdruck wird sich über die innere Dichtlippe 32 bzw. das damit gebildete Rückschlagventil 34 in den Innenraum der Kapselaufnahme 2 entspannen. Die äussere Dichtlippe 33 wird entsprechend nicht mehr radial nach aussen an die Dichtfläche 24` (siehe Figur 3) gepresst, so dass sich das Auslassventil 35 öffnet. Restwasser aus der Dichtungskammer 31 kann somit über den Restwasserablauf austreten.

## Patentansprüche

1. Brühkammer (1) für die Zubereitung eines flüssigen Lebensmittels aus einer Kapsel (10), umfassend eine Kapselaufnahme (2) und eine Verschlussplatte (3) zum Einschliessen einer Kapsel (10),
wobei die Kapselaufnahme (2) und die Verschlussplatte (3) relativ zueinander von einer offenen Position zum Einführen der Kapsel (10) in eine geschlossene Position zum Einschliessen der Kapsel (10) verschiebbar sind,
wobei die Brühkammer (1) wenigstens einen Fluideinlass (5) zum Einbringen eines Brühfluides, insbesondere Wasser, in die Brühkammer (1) und wenigstens einen Fluidauslass (6) zum Ausbringen des flüssigen Lebensmittels aufweist,
wobei die Kapselaufnahme (2) wenigstens zweiteilig ausgestaltet ist und ein Bodenteil (20) und ein Halterteil (26) aufweist,
wobei in geschlossener Position das Halterteil (26) der Kapselaufnahme (2) gegen die Verschlussplatte (3) pressbar ist, um ein dichtes Einschliessen der Kapsel (10) in der Brühkammer (1) zu ermöglichen,
wobei die Kapselaufnahme (2) eine Dichtung (30) aufweist, welche zwischen dem Halterteil (26) und dem Bodenteil (20) eine fluiddichte Verbindung ermöglicht,
wobei das Bodenteil (20) und das Halterteil (26) teleskopartig in einer Achsrichtung (40) relativ ineinander verschiebbar sind,
**dadurch gekennzeichnet, dass** die Dichtung (30) eine äussere Dichtlippe (33) und eine innere Dichtlippe (32) aufweist.

2. Brühkammer (1) nach Anspruch 1, wobei die äussere Dichtlippe (33) derart ausgestaltet ist, um mit einer Dichtfläche (24) quer zur Achsrichtung (40) eine Dichtverbindung zu ermöglichen.

3. Brühkammer (1) nach Anspruch 1 oder 2, wobei die äussere Dichtlippe (33) radial zur Achsrichtung dehnbar ist, um mit einer Dichtfläche (24') parallel zur Achsrichtung (40) eine Dichtverbindung zu ermöglichen.

4. Brühkammer (1) nach einem der Ansprüche 1 bis 3, wobei das Bodenteil (20) und das Halterteil (26) hydraulisch relativ ineinander verschiebbar sind.

5. Brühkammer (1) nach Anspruch 4, wobei ein für die hydraulische Verschiebung benötigtes Hydraulikfluid gleichzeitig das Brühfluid ist.

6. Brühkammer (1) nach einem der Ansprüche 1 bis 5, wobei die Brühkammer (1) ein Rückschlagventil (34) aufweist, welches ein Rücklaufen eines Fluides aus der Brühkammer (1) in den Fluideinlass (5) verhindert.

7. Brühkammer (1) nach Anspruch 6, wobei die innere Dichtlippe (32) der Dichtung (30) das Rückschlagventil (34) bildet.

8. Brühkammer (1) nach einem der Ansprüche 1 bis 7, wobei die Dichtung (30) bei geschlossener Brühkammer (1) zwischen der inneren Dichtlippe (32) und der äusseren Dichtlippe (33) eine geschlossene Dichtungskammer (31) ausbildet, welche mit dem Fluideinlass (5) direkt verbunden ist.

9. Brühkammer (1) nach Anspruch 8, wobei die Dichtungskammer (31) ein Auslassventil (35) zum Entleeren der Dichtungskammer (31) aufweist.

10. Brühkammer (1) nach Anspruch 9, wobei die äussere Dichtlippe (33) der Dichtung (30) das Auslassventil bildet.

11. Brühkammer (1) nach Anspruch 9 oder 10, wobei bei offener Brühkammer (1) das Auslassventil (35) offen ist und die Dichtungskammer (31) mit einem Restwasserablauf (4) verbunden ist.

12. Brühkammer (1) nach einem der Ansprüche 1 bis 11, wobei zwischen Bodenteil (20) und Halterteil (26) eine Feder (8) derart angeordnet ist, dass das Halterteil (26) und das Bodenteil (20) entgegen einer Rückstellkraft der Feder (8) relativ zueinander verschiebbar sind.

13. Brüheinheit (41) für die Zubereitung eines flüssigen Lebensmittels aus einer Kapsel (10) umfassend eine Brühkammer (1) nach einem der Ansprüche 1 bis 12.

14. Maschine für die Zubereitung eines flüssigen Lebensmittels aus einer Kapsel (10) umfassend eine Brühkammer (1) nach einem der Ansprüche 1 bis 12 oder eine Brüheinheit (41) nach Anspruch 13.

15. System für die Zubereitung eines flüssigen Lebensmittels umfassend eine Maschine nach Anspruch 14 und eine Kapsel (10), wobei die Kapsel (10) einen Kapselkörper (11) und einen Deckel (13) aufweist, wobei der Kapselkörper (11) und der Deckel (13) umlaufend an einem Flansch (14) derart verbunden sind, dass eine geschlossene Kammer (16) zur Aufnahme einer Lebensmittelsubstanz gebildet wird.

## Claims

1. Brewing chamber (1) for the preparation of a liquid foodstuff from a capsule (10), comprising a capsule holder (2) and a closure plate (3) for enclosing a capsule (10),
wherein the capsule receptacle (2) and the closure plate (3) are displaceable relative to one another from an open position for inserting the capsule (10) into a closed position for enclosing the capsule (10),
wherein the brewing chamber (1) has at least one fluid inlet (5) for introducing a brewing fluid, in particular water, into the brewing chamber (1) and at least one fluid outlet (6) for discharging the liquid foodstuff,
wherein the capsule holder (2) is designed in at least two parts and has a base part (20) and a holder part (26),
wherein, in the closed position, the holder part (26) of the capsule receptacle (2) can be pressed against the closure plate (3) in order to enable the capsule (10) to be sealed tightly in the brewing chamber (1),
wherein the capsule receptacle (2) has a seal (30) which enables a fluid-tight connection between the holder part (26) and the base part (20),
wherein the base part (20) and the holder part (26) are telescopically displaceable relative to one another in an axial direction (40),
**characterised in that** the seal (30) has an outer sealing lip (33) and an inner sealing lip (32).

2. Brewing chamber (1) according to claim 1, wherein the outer sealing lip (33) is designed in such a way as to enable a sealing connection with a sealing surface (24) transverse to the axial direction (40).

3. Brewing chamber (1) according to claim 1 or 2, wherein the outer sealing lip (33) is expandable radially to the axial direction in order to enable a sealing connection with a sealing surface (24') parallel to the axial direction (40).

4. Brewing chamber (1) according to one of claims 1 to 3, wherein the base part (20) and the holder part (26) are hydraulically displaceable relative to one another.

5. Brewing chamber (1) according to claim 4, wherein a hydraulic fluid required for the hydraulic displacement is at the same time the brewing fluid.

6. The brewing chamber (1) according to any one of claims 1 to 5, wherein the brewing chamber (1) comprises a non-return valve (34) which prevents a fluid from flowing back from the brewing chamber (1) into the fluid inlet (5).

7. Brewing chamber (1) according to claim 6, wherein the inner sealing lip (32) of the seal (30) forms the non-return valve (34).

8. Brewing chamber (1) according to one of claims 1 to 7, wherein the seal (30) forms a closed sealing chamber (31) between the inner sealing lip (32) and the outer sealing lip (33) when the brewing chamber (1) is closed, which is directly connected to the fluid inlet (5).

9. Brewing chamber (1) according to claim 8, wherein the sealing chamber (31) has an outlet valve (35) for emptying the sealing chamber (31).

10. Brewing chamber (1) according to claim 9, wherein the outer sealing lip (33) of the seal (30) forms the outlet valve.

11. Brewing chamber (1) according to claim 9 or 10, wherein when the brewing chamber (1) is open, the outlet valve (35) is open and the sealing chamber (31) is connected to a residual water outlet (4).

12. Brewing chamber (1) according to one of claims 1 to 11, wherein a spring (8) is arranged between the base part (20) and the holder part (26) in such a way that the holder part (26) and the base part (20) are displaceable relative to one another against a restoring force of the spring (8).

13. A brewing unit (41) for preparing a liquid food product from a capsule (10) comprising a brewing chamber (1) according to any one of claims 1 to 12.

14. A machine for preparing a liquid food product from a capsule (10) comprising a brewing chamber (1) according to any one of claims 1 to 12 or a brewing unit (41) according to claim 13.

15. A system for the preparation of a liquid foodstuff comprising a machine according to claim 14 and a capsule (10), wherein the capsule (10) has a capsule body (11) and a lid (13), wherein the capsule body (11) and the lid (13) are connected circumferentially at a flange (14) such that a closed chamber (16) for receiving a food substance is formed.

## Revendications

1. Chambre d'infusion (1) pour la préparation d'un produit alimentaire liquide à partir d'une capsule (10), comprenant un logement de capsule (2) et une plaque de fermeture (3) pour enfermer une capsule (10),
le logement de capsule (2) et la plaque de fermeture (3) pouvant être déplacés l'un par rapport à l'autre d'une position ouverte pour introduire la capsule (10) à une position fermée pour enfermer la capsule (10),
la chambre d'infusion (1) présentant au moins une entrée de fluide (5) pour introduire un fluide d'infusion, en particulier de l'eau, dans la chambre d'infusion (1) et au moins une sortie de fluide (6) pour évacuer l'aliment liquide,
le logement de capsule (2) étant conçu au moins en deux parties et présentant une partie de fond (20) et une partie de support (26),
dans la position fermée, la partie de support (26) du logement de capsule (2) peut être pressée contre la plaque de fermeture (3) afin de permettre un enfermement étanche de la capsule (10) dans la chambre d'infusion (1),
le logement de capsule (2) présentant un joint d'étanchéité (30) qui permet une liaison étanche aux fluides entre la partie de support (26) et la partie de fond (20),
la partie de fond (20) et la partie de support (26) pouvant être déplacées l'une dans l'autre de manière télescopique dans une direction axiale (40),
**caractérisé en ce que** le joint d'étanchéité (30) présente une lèvre d'étanchéité extérieure (33) et une lèvre d'étanchéité intérieure (32).

2. Chambre d'infusion (1) selon la revendication 1, dans laquelle la lèvre d'étanchéité extérieure (33) est configurée de manière à permettre une liaison étanche avec une surface d'étanchéité (24) transversale à la direction axiale (40).

3. Chambre d'infusion (1) selon la revendication 1 ou 2, dans laquelle la lèvre d'étanchéité extérieure (33) est extensible radialement par rapport à la direction axiale, afin de permettre une liaison étanche avec une surface d'étanchéité (24') parallèle à la direction axiale (40).

4. Chambre d'infusion (1) selon l'une des revendications 1 à 3, dans laquelle la partie de fond (20) et la partie de support (26) sont déplaçables hydrauliquement l'une dans l'autre.

5. Chambre d'infusion (1) selon la revendication 4, dans laquelle un fluide hydraulique nécessaire pour le déplacement hydraulique est en même temps le fluide d'infusin.

6. Chambre d'infusion (1) selon l'une des revendications 1 à 5, dans laquelle la chambre d'infusion (1) comporte un clapet anti-retour (34) qui empêche un retour d'un fluide de la chambre d'infusion (1) vers l'entrée de fluide (5).

7. Chambre d'infusion (1) selon revendication 6, dans laquelle la lèvre d'étanchéité intérieure (32) du joint d'étanchéité (30) forme le clapet anti-retour (34).

8. Chambre d'infusion (1) selon l'une des revendications 1 à 7, dans laquelle le joint d'étanchéité (30) forme, lorsque la chambre d'infusion (1) est fermée, entre la lèvre d'étanchéité intérieure (32) et la lèvre d'étanchéité extérieure (33), une chambre d'étanchéité fermée (31) qui est directement reliée à l'entrée de fluide (5).

9. Chambre d'infusion (1) selon la revendication 8, dans laquelle la chambre d'étanchéité (31) comprend une soupape d'évacuation (35) pour vider la chambre d'étanchéité (31).

10. Chambre d'infusion (1) selon la revendication 9, dans laquelle la lèvre d'étanchéité extérieure (33) du joint d'étanchéité (30) forme la soupape de sortie.

11. Chambre d'infusion (1) selon la revendication 9 ou 10, dans laquelle, lorsque la chambre d'infusion (1) est ouverte, la soupape de sortie (35) est ouverte et la chambre d'étanchéité (31) est reliée à une évacuation d'eau résiduelle (4) .

12. Chambre d'infusion (1) selon l'une des revendications 1 à 11, dans laquelle un ressort (8) est disposé entre la partie de fond (20) et la partie de support (26) de telle sorte que la partie de support (26) et la partie de fond (20) peuvent être déplacées l'une par rapport à l'autre à l'encontre d'une force de rappel du ressort (8).

13. Unité d'infusion (41) pour la préparation d'un produit alimentaire liquide à partir d'une capsule (10) comprenant une chambre d'infusion (1) selon l'une des revendications 1 à 12.

14. Machine pour la préparation d'un produit alimentaire liquide à partir d'une capsule (10) comprenant une chambre d'infusion (1) selon l'une des revendications 1 à 12 ou une unité d'infusion (41) selon la revendication 13.

15. Système pour la préparation d'un produit alimentaire liquide comprenant une machine selon la revendication 14 et une capsule (10), la capsule (10) présentant un corps de capsule (11) et un couvercle (13), le corps de capsule (11) et le couvercle (13) étant reliés de manière périphérique à une bride (14) de telle sorte qu'une chambre fermée (16) soit formée pour recevoir une substance alimentaire.
